# EUROPEAN PATENT APPLICATION

(11) **EP 1 795 438 A1**
(43) Date of publication of application: **13.06.2007**
(21) Application number: 04771435.7
(22) Date of filing: 09.08.2004
(51) Int. Cl.: B62J 6/12, B62M 23/02, H02K 7/18

(54) **WHEEL MOUNTED WITH DEVICE DOUBLING AS BOTH IN-HUB DC GENERATOR FOR BICYCLE AND MOTOR FOR AUXILIARY POWER**

(71) Applicant: NIKKO Co., Ltd., Tokyo 125-0061 (JP)
(72) Inventor: ISHIMOTO, Zenichi, NIKKO CO., LTD., Tokyo 1250061 (JP); YAMAZAKI, Toshiharu, NIKKO CO., LTD., Tokyo 1250061 (JP)
(74) Representative: Grättinger & Partner (GbR)
(86) International application number: PCT/JP2004/011448
(87) International publication number: WO 2006/016397

(57) **Abstract**

For the purpose of providing a direct current power generator accommodating a bicycle hub or a motor for auxiliary power, the structure of which is simple, the weight of which is light and which may generate sufficient electric power and also be applicable to an auxiliary to drive a bicycle without wasting excess energy, a wheel equipped with the direct current power generator accommodating a bicycle hub or the motor for auxiliary power, a bicycle equipped with the direct current power generator accommodating a bicycle hub or the motor for auxiliary power and the direct current power generator accommodating a bicycle hub, a direct current power generator accommodating a bicycle hub or a motor for auxiliary power comprising a hub connected to a bicycle wheel through a spoke, a rotational production part arranged in the hub, at least one or more motor fixed to the center of the hub and engaged with the above mentioned rotational driving part whereby charging and driving may be performed, a rechargeable battery equipped on the outside of the above mentioned hub and connected to the above mentioned motor in series, a backflow prevention diode connected to the above mentioned battery in series and a switch connected to the above mentioned backflow prevention diode in parallel are provided, and the above mentioned switch is turned on whereby the electric power charged in the above mentioned battery is supplied to the above mentioned motor for driving.

## Description

### [Field of the Invention]

The present invention relates to a direct current power generator accommodating a bicycle hub or a motor for auxiliary power providing a driving device which may convert rotational motion energy of a bicycle wheel to electric energy and supply the energy directly to a headlamp or charge the energy to a battery and drive the wheel by the charged battery, a wheel equipped with the direct current power generator accommodating a bicycle hub or the motor for auxiliary power, a bicycle equipped with the direct current power generator accommodating a bicycle hub or the motor for auxiliary power and the direct current power generator accommodating a bicycle hub.

### [Background of the invention]

For the purpose of full explanation of the technical level pertaining to the present invention at present, every patent, patent applications, patent publications, scientific articles and so on cited or specified in the present application are all incorporated herein for reference.

Some generating equipments utilizing a bicycle hub have conventionally been disclosed in Patent References 1 to 4 as referred to later. Power generators characterized by shape of a coil axis are disclosed in Patent References 1 to 3. On the other hand, a power generator disclosed in Patent Reference 4 is characterized by an electric circuit to be connected to.

Patent Reference 1 discloses a claw-pole type power generator for bicycle providing stator yoke wherein slits are formed so that eddy current generated in an iron core member or any other member decreases to improve generating efficiency.

Further, Patent Reference 2 discloses a hub power generator, which is much larger and heavier than a friction roller power generator, proving a coil, the diameter of which is small and the coil axis of which is doubly used so that the weight may be reduced.

In addition, Patent Reference 3 discloses an invention wherein a main generating stator and a second generating stator are independently arranged in parallel in different phases so that electric supply is respectively secured exclusively for headlamp and exclusively for secondary device without increasing load to solve the issue that electric power for headlamp is seized and rotation torque increases when electric power from a hub dynamo is used as power source of the above mentioned secondary device.

On the other hand, Patent Reference 4 discloses power a generation control mechanism providing a switching mechanism switching a state of load reduction to solve the issue that switching power generation driving or troublesome work is required and failure of the work results in occurrence of unnecessary load by power generation driving even when electric power is unnecessary.
[Patent Reference 1] Patent Publication No. 2991705
[Patent Reference 2] Laid-Open Patent Publication No. H06-261511
[Patent Reference 3] Patent Publication No. 3380834
[Patent Reference 4] Patent Publication No. 3378268

### [Disclosure of the invention]

### [Issue to be solved by the Invention]

The conventional eight-pole friction roller power generator for bicycle, which is an exterior type power generator providing friction conductive roller and bicycle tire, has low machinery efficiency of friction conduction and increases load to bicycle pedal, for which reason a power generator accommodating a bicycle hub is proposed as mentioned in the above. In the power generator accommodating a bicycle hub, as shown by the product of winding number of coil, magnetic flux density and peripheral velocity, electromotive force is proportional to peripheral velocity. Because of this, contrary to a friction roller power generator rotating a rotation part by a contact with a periphery of a bicycle tire a power generator accommodating a bicycle hub rotates a rotation part in the center of the bicycle tire, for which reason peripheral velocity is small. Therefore, in order to obtain the same amount of electromotive force as a friction roller power generator, a power generator accommodating a bicycle hub requires increase of a pole number instead of peripheral velocity. In particular, more than 24 poles are required. In addition, winding number of coil is required to be increased. Further, winding number of coil is required to be increased and a magnet is required to be strengthened, for which reason a weight of a power generator accommodating a bicycle hub is heavy.

On the other hand, unlike a friction roller power generator, a power generator accommodating a bicycle hub has a difficulty to control a generating state and a non-generating state, and even if the control is performed, reduction of load to a pedal is not expected. Therefore, effective utilization of generated electromotive force is required. For example, effective utilization as a driving source of electric bicycle is possible. However, in the conventional electric bicycle, it is predominant that a driving device is connected to a chain wheel wherethrough a rear wheel is driven. Namely, there is a large number of parts and the structure is complex, for which reason it is not easy to apply the driving source to the existing bicycle.

The purpose of the present invention is to provide a direct current power generator accommodating a bicycle hub or a motor for auxiliary power, the structure of which is simple, the weight of which is light and which may generate sufficient electric power and also be applicable to an auxiliary to drive a bicycle without wasting excess energy, a wheel equipped with the direct current power generator accommodating a bicycle hub or the motor for auxiliary power, a bicycle equipped with the direct current power generator accommodating a bicycle hub or the motor for auxiliary power and the direct current power generator accommodating a bicycle hub.

### [Means for Solving the Issue]

The first aspect of the present invention is to provide a direct current power generator accommodating a bicycle hub or a motor for auxiliary power comprising a hub connected to a bicycle wheel through a spoke, a rotational production part arranged in the hub, at least one or more motor fixed to the center of the hub and engaged with the above mentioned rotational driving part whereby charging and driving may be performed, a rechargeable battery equipped on the outside of the above mentioned hub and connected to the above mentioned motor in series, a backflow prevention diode connected to the above mentioned battery in series and a switch connected to the above mentioned backflow prevention diode in parallel, and the above mentioned switch is turned on whereby the electric power charged in the above mentioned battery is supplied to the above mentioned motor for driving. In addition, if a rechargeable battery lights a lamp through a switch, the lamp may light in given amount of light regardless of running speed and also while the bicycle is stopped.

The above mentioned switch is characterized by being further connected to a rotation number detection pedal switch in series and in that auxiliary power is activated after a pedal rotates.

The above mentioned rotational production part may provide an axis fixed to a frame of a bicycle, a hub rotatably arranged around the axis through a bearing and connected to a bicycle wheel through a plurality of bicycle spokes, a ring gearwheel wherein an internal tooth is formed on the inner periphery of the hub, a first coaxial gearwheel comprising a large diameter gearwheel and a small diameter gearwheel rotatably arranged on the above mentioned axis through a bearing, a large diameter planetary gearwheel interlocked with the above mentioned small diameter gearwheel, at least one or more small diameter planetary gearwheel mounted in the above mentioned ring gearwheel and arranged on the same axis as the large diameter planetary gearwheel and at least one or more motor prepared so that a pinion gear attached to a tip of the rotation axis is arranged at the position of the external tooth of the above mentioned large diameter gearwheel.

A lamp may also be connected between a switch and a battery in series. Also, a switch may further be connected to a diode in parallel. The second aspect of the present invention is to provide a wheel equipped with a direct current power generator accommodating a bicycle hub or a motor for auxiliary power in the center of the wheel.

The third aspect of the present invention is to provide a bicycle equipped with a direct current power generator accommodating a bicycle hub or a motor for auxiliary power in the center of a wheel.

The forth aspect of the present invention is to provide a direct current power generator accommodating a bicycle hub comprising a hub connected to a bicycle wheel through a spoke, a rotational production part arranged in the hub, at least one or more motor fixed to the center of the hub and engaged with the above mentioned rotational driving part whereby charging and driving may be performed. The above mentioned rotational production part is characterized by providing an axis fixed to a frame of a bicycle, a hub rotatably arranged around the axis through a bearing and connected to a bicycle wheel through a plurality of bicycle spokes, a ring gearwheel wherein an internal tooth is formed on the inner periphery of the hub, a first coaxial gearwheel comprising a large diameter gearwheel and a small diameter gearwheel rotatably arranged on the above mentioned axis through a bearing, a large diameter planetary gearwheel interlocked with the above mentioned small diameter gearwheel, at least one or more small diameter planetary gearwheel mounted in the above mentioned ring gearwheel and arranged on the same axis as the large diameter planetary gearwheel and at least one or more motor prepared so that a pinion gear attached to a tip of the rotation axis is arranged at the position of the external tooth of the above mentioned large diameter gearwheel.

### [Effects of the Invention]

According to the present invention, it is possible to provide a direct current power generator accommodating a bicycle hub or a motor for auxiliary power, the structure of which is simple, the weight of which is light and which may generate sufficient electric power. In addition, when not required, the generated electric power is charged for use as electric source of a motor for electric auxiliary and a lamp according to need.

### [The best mode for carrying out the Invention]

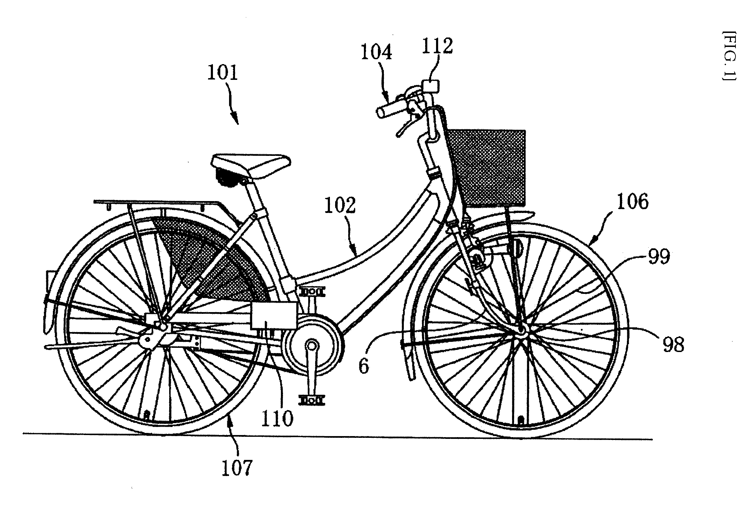

The embodiments of the present invention are explained by means of Fig. 1 to Fig. 7 as follows.

### (The first embodiment)

The first embodiment of the present invention is explained as follows. Fig. 1 shows a block diagram of the bicycle equipped with the power generator accommodating a bicycle hub as claimed in the present invention.

As shown in Fig. 1, Bicycle 101 equipped with a direct current power generator accommodating a bicycle hub or a motor for auxiliary power as claimed in the present invention provides Front wheel 106 and Rear wheel 107 at the front and the rear of Frame 102, and Front wheel 106 is arranged on a fork for front wheel extensionally arranged underneath Handle 104 arranged at one side of Frame 102. Front wheel 106 comprises Axis 8 rotatably penetrating through Hub 98 which is fixed through Spoke 99 to a rim. The direct current power generator accommodating a bicycle hub or the motor for auxiliary power is provided on Hub 98, whereby power may be generated for an electric lamp and for auxiliary power. Switches 66 and 70 controlling the direct current power generator accommodating a bicycle hub or the motor for auxiliary power are inserted into Box 112 arranged on Handle 104. On the other hand, Box 110 including Battery 68 charging the voltage generated by the direct current power generator accommodating a bicycle hub or the motor for auxiliary power, Diode 60 preventing backflow and Pedal rotation sensor 91 is arranged underneath Frame 102. The conductive wire electrically connecting Box 110, Box 112 and the direct current power generator accommodating a bicycle hub or the motor for auxiliary power passes through the inside of the frame of the bicycle, for which reason it is not shown in the figure.

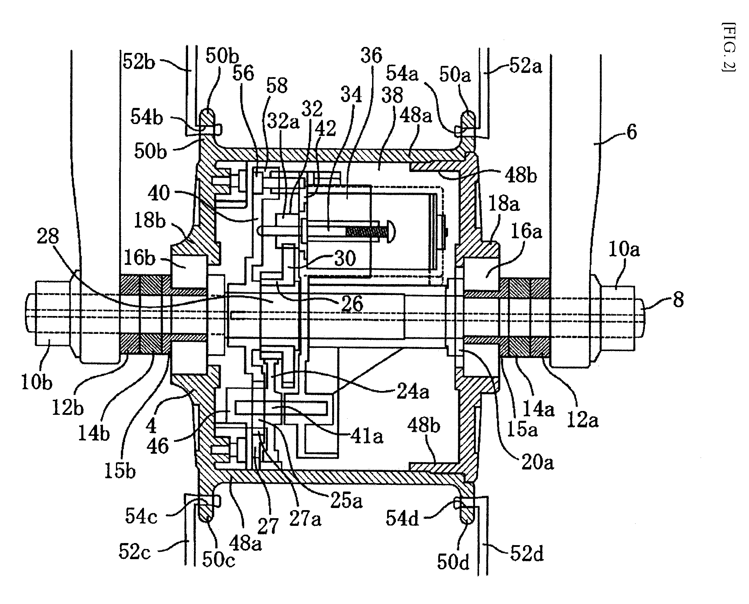

Fig. 2 shows Direct current power generator accommodating a bicycle hub or Motor for auxiliary power 2 as claimed in the present invention. Direct current power generator accommodating a bicycle hub or Motor for auxiliary power comprises a motor and a gear mounted into the inside of Hub 98 of Front wheel 106 of Bicycle 101 wherein both ends of Axis 8 are fixed to the tips of the right and left Forks for front wheel 6, Axis 8 penetrates Spoke flange 18b wherein Yoke 48a is cylindrically and vertically arranged and Spoke flange 18a wherewith Yoke 48b cylindrically and vertically arranged inside Yoke 48a is fitted, Holes 54a, 54b, 54c and 54d are open on the tips of Hub seals 50a, 50b, 50c and 50d which are extensional parts of Spoke flanges 18a and 18b arranged at both ends of Yoke 48a and Spokes 52a, 52b, 52c and 52d penetrate the holes and are fixed. Direct current power generator accommodating a bicycle hub or Motor for auxiliary power is fixed to Axis 8, and the power generator is rotated through a gearwheel by a rotation of the front wheel.

A motor axis of the direct current power generator accommodating a bicycle hub or the motor for auxiliary power rotates. However, Axis 8 does not rotate. It is preferable that Motor 2 is battery driven, and therefore is direct current driven. In addition, it is preferable that a brush accommodated in the motor is abrasion resistant made preferably from compound material of copper sintered compact and carbon. Axis 8 is fixed to Bearings 16a and 16b by Nuts 10a and 10b from outside of Fork 6 and by Control washers 12a and 12b, Lock nuts 14a and 14b and Bearing nuts 15a and 15b from inside of Fork 6.

Bearing 16b of Direct current power generator accommodating a bicycle hub or Motor for auxiliary power is fitted into the center of Spoke flange 18a and rotatably fixed to Axis 8. Likewise, Bearing 16a is fitted into Spoke flange 18a and rotatably fixed to Axis 8.

Ring gearwheel 22 comprising Internal tooth 22a is formed on the inner periphery of Yoke 48a and neighborhood of joint part with Spoke flange 18b of Direct current power generator accommodating a bicycle hub or Motor for auxiliary power.

Inside Spoke flange 18b and Spoke flange 18a of Direct current power generator accommodating a bicycle hub or Motor for auxiliary power, Motor 36 fixed to Axis 8 and Gear housings 40 and 42 mounting Motor 36 and gears are internally arranged. Inside Gear housings 40 and 42, Pinion gear 32 attached to Axis 34 of Motor 36 interlocks with Second gear 30 attached to Axis 8 through Bearing 28. Likewise, Third gear 26 attached to Axis 8 through Bearing 28 and fixed to Second Gear 30, Planetary gears 24a, 24b and 24c interlocking with Third gear 26 and arranged around Planetary axises 41a, 41b and 41c provided in Gear housing 40 and 42, Second planetary gears 41a, 41b and 41c arranged and fixed around Planetary axises 41a, 41b and 41c coaxially with Planetary gears 24a, 24b and 24c and Ring gearwheel 27 providing Second planetary gear 25a, 25b and 25c and Internal tooth 27a interlock, whereby speed of rotational motion of Yoke 48a is reduced and transmitted to Motor 36. In the embodiment, in order to obtain sufficient electric power, it is preferable that a motor rotates more than thirty times during a wheel equipped with the motor rotates once, which provides high generating efficiency, although it depends on a motor. In addition, as for structure of gear, a result of experimental verification shows that a planetary gear of three point support is the most stable and efficient, and in case of the other structure, gear efficiency is reduced.

In order to extract electric power from Motor 36 inside Spoke flange 18b and Spoke flange 18a, a ditch may be ditched on Axis 8 into which a wire is inserted so that it becomes possible to connect a power wire with the outside, although it is not shown in the figure.

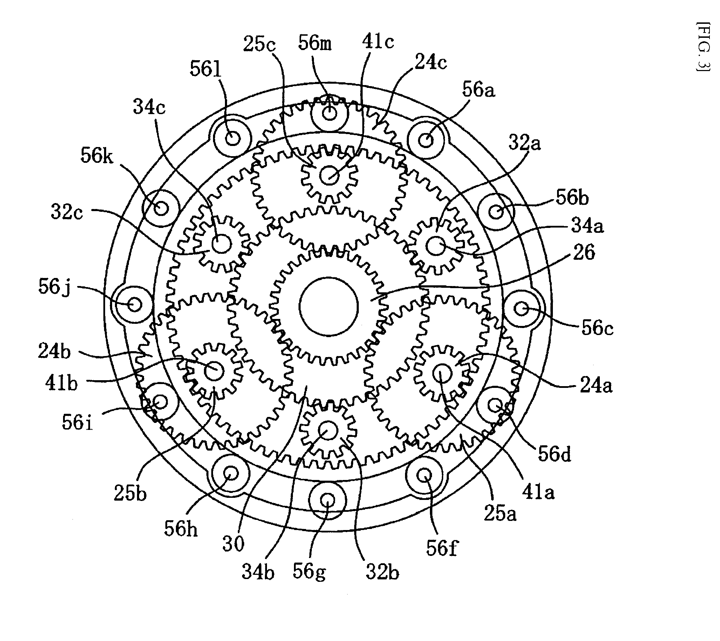

Fig. 3 shows a side view of Direct current power generator accommodating a bicycle hub or Motor for auxiliary power as claimed in the present invention. As shown in Fig. 3, the motor provides three Motors 36a, 36b and 36c, Pinion gears 32a, 32b and 32c and three Planetary gears 25a, 25b and 25c. Further, Second planetary gears 25a, 25b and 25c are provided fixed to the same axis as Planetary gears 24a, 24b and 24c. Planetary gears 24a, 24b and 24c interlock with Third gear 26 and Second planetary gears 25a, 25b and 25c interlock with Ring gearwheel 27. In addition, Pinion gears 32 interlock with Second gear 30 attached to Axis 8 through Bearing 28, and also interlock with Third gear 26 fixed to Second gear 30 attached to Axis 8 through Bearing 28. In the present structure, driving and power generating by the three motors may be performed.

In the present invention, the structure comprising three motors is shown as an embodiment. However, the invention is not limited to the embodiment but is only necessary to provide at least one motor to be able to increase generated electric power.

Fig. 4 shows a circuit diagram based on the first embodiment of Direct current power generator accommodating a bicycle hub or Motor for auxiliary power as claimed in the present invention. In Fig. 4, Motors 36a, 36b and 36c are motors or power generators connected in series, and Backflow prevention diode 60 and Rechargeable battery 68 are reconnected to Motor 36c. Electric power generated by the motors is charged in Rechargeable battery 68 through the backflow prevention diode. The electric power charged in Rechargeable battery 68 is supplied to the motors through Pedal sensor S 1 by switching Electrical switch 70 on only while a pedal rotates and the motor for auxiliary power drives. In addition, if Rechargeable battery 68 lights a lamp through Switch 66, the lamp may light in given amount of light regardless of running speed and also while the bicycle is stopped.

Pedal sensor S1 provides an optical sensor detecting movement speed of a pedal, a crank connected to the pedal and a sprocket arranging a crank at the center of it to drive a chain. Other than the above, the sensor may be attached to the pedal to detect treadle pressure. Also, a torque sensor arranged on the rotation axis of a crank or a saddle pressure sensor may be provided.

### (The second embodiment)

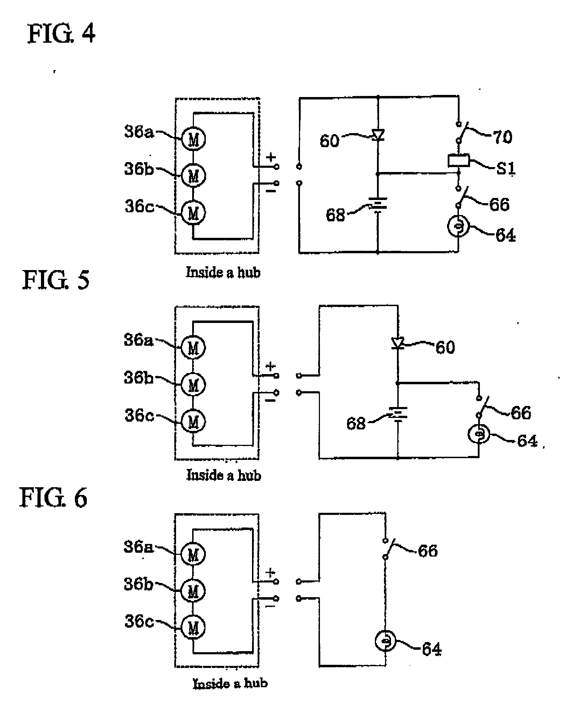

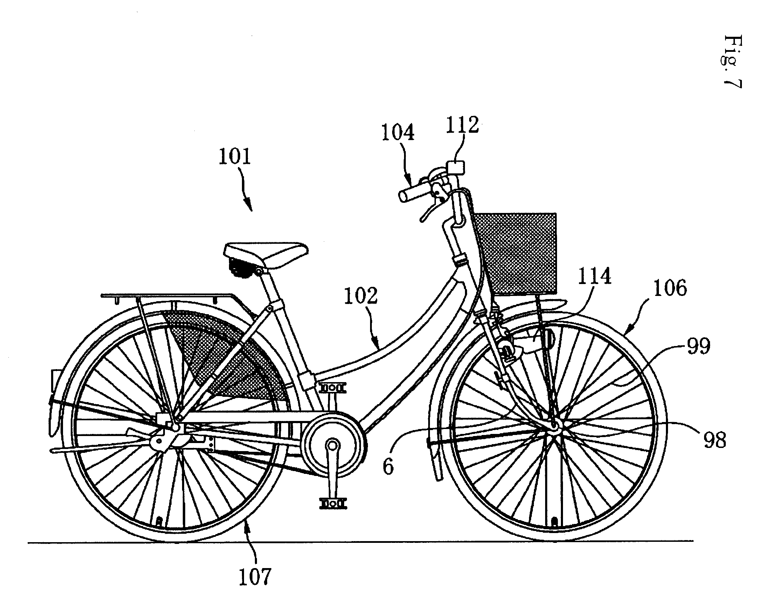

In Fig. 5, Motors 36a, 36b and 36c are motors or power generators connected in series, and Backflow prevention diode 60 and Condenser 62 are reconnected to Motor 36c. On the other hand, Headlamp switch 66 and Headlamp 64 are connected in parallel with Condenser 62. While Headlamp switch 66 is off, electromotive force generated by Motors 36a, 36b and 36c is charged in Condenser 62. On the other hand, while Headlamp switch 66 is short-circuited, Headlamp 64 is lighted and because of the existence of Condenser 62, electromotive force generated by the difference of running speed fluctuates, whereby flicker of Headlamp 64 may be prevented. Instead of Condenser 62, a rechargeable battery may also be used. In addition, as shown in Fig. 7, it is preferable that Condenser 62 (or a rechargeable battery) and Diode 60 are accommodated in a lamp or Lamp 114 to be arranged on a bicycle.

### (The third embodiment)

Fig. 6 shows a circuit diagram based on the third embodiment of Direct current power generator accommodating a bicycle hub or Motor for auxiliary power as claimed in the present invention. Through Switch 66, Lamp 64 is directly lighted by means of electromotive power generated by Motors 36a, 36b and 36c. A light may also be a lamp accommodating a rechargeable battery.

### [Industrial applicability]

According to the present invention, it is possible, at low cost, to provide a direct current power generator accommodating a bicycle hub or a motor for auxiliary power, the structure of which is simple, the weight of which is light and which may generate sufficient electric power. The present invention, therefore, has high industrial applicability. In addition, the present invention is applicable to an electric bicycle only by changing a bicycle wheel and adding a pedal sensor.

While the invention has been described with reference to certain embodiments, it will be understood by those skilled in the art that various changes may be made and equivalents may be substituted without departing from the scope of the invention. In addition, may modifications may be made to adapt a particular situation or material to the teachings of the invention without departing from its scope. Therefore, it is intended that the invention not be limited to the particular embodiments disclosed, but will include all embodiments falling within the scope of the appended claims.

### [Brief Description of Drawings]

[Fig.1]
   Fig. 1 shows a block diagram of the bicycle equipped with the power generator accommodating a bicycle hub as claimed in the present invention.
[Fig.2]
   Fig. 2 shows a block diagram of Direct current power generator accommodating a bicycle hub or Motor for auxiliary power as claimed in the present invention.
[Fig.3]
   Fig. 3 shows a side view of Direct current power generator accommodating a bicycle hub or Motor for auxiliary power as claimed in the present invention.
[Fig.4]
   Fig. 4 shows a circuit diagram based on the first embodiment of Direct current power generator accommodating a bicycle hub or Motor for auxiliary power as claimed in the present invention.
[Fig.5]
   Fig. 5 shows a circuit diagram based on the second embodiment of Direct current power generator accommodating a bicycle hub or Motor for auxiliary power wherein a lamp lights in given amount of light without auxiliary power as claimed in the present invention.
[Fig.6]
   Fig. 6 shows a circuit diagram based on the third embodiment of Direct current power generator accommodating a bicycle hub or Motor for auxiliary power to be used only for a lamp without auxiliary power as claimed in the present invention.
[Fig.7]
   Fig. 7 shows a block diagram of the bicycle equipped with a lamp accommodating a battery and a diode based on the embodiment of Direct current power generator accommodating a bicycle hub or Motor for auxiliary power 2 wherein a lamp lights in given amount of light without auxiliary power as claimed in the present invention.

## Claims

1. A direct current power generator accommodating a bicycle hub or a motor for auxiliary power comprising a hub connected to a bicycle wheel through a spoke, a rotational production part arranged in the hub, at least one or more motor fixed to the center of the hub and engaged with the above mentioned rotational driving part whereby charging and driving may be performed, a rechargeable battery equipped on the outside of the above mentioned hub and connected to the above mentioned motor in series, a backflow prevention diode connected to the above mentioned battery in series and a switch connected to the above mentioned backflow prevention diode in parallel, and the above mentioned switch is turned on whereby the electric power charged in the above mentioned battery is supplied to the above mentioned motor for driving.

2. A direct current power generator accommodating a bicycle hub or a motor for auxiliary power as claimed in Claim1, wherein the above mentioned switch is further connected to a rotation number detection pedal switch in series and in that auxiliary power is activated after a pedal rotates.

3. A direct current power generator accommodating a bicycle hub or a motor for auxiliary power as claimed in Claim1, wherein the above mentioned rotational production part provides an axis fixed to a frame of a bicycle, a hub rotatably arranged around the axis through a bearing and connected to a bicycle wheel through a plurality of bicycle spokes, a ring gearwheel wherein an internal tooth is formed on the inner periphery of the hub, a first coaxial gearwheel comprising a large diameter gearwheel and a small diameter gearwheel rotatably arranged on the above mentioned axis through a bearing, a large diameter planetary gearwheel interlocked with the above mentioned small diameter gearwheel, at least one or more small diameter planetary gearwheel mounted in the above mentioned ring gearwheel and arranged on the same axis as the large diameter planetary gearwheel and at least one or more motor prepared so that a pinion gear attached to a tip of the rotation axis is arranged at the position of the external tooth of the above mentioned large diameter gearwheel.

4. A direct current power generator accommodating a bicycle hub or a motor for auxiliary power as claimed in Claim 1, wherein a lamp is connected between a switch and a battery in series.

5. A wheel equipped in the center with a direct current power generator accommodating a bicycle hub or a motor for auxiliary power as claimed in Claim 1.

6. A bicycle equipped in the center of a wheel with a direct current power generator accommodating a bicycle hub or a motor for auxiliary power as claimed in Claim 1.

7. A direct current power generator accommodating a bicycle hub comprising a hub connected to a bicycle wheel through a spoke, a rotational production part arranged in the hub, at least one or more motor fixed to the center of the hub and engaged with the above mentioned rotational driving part whereby charging and driving may be performed.

8. A direct current power generator accommodating a bicycle hub as claimed in Claim 7, wherein the above mentioned rotational production part provides an axis fixed to a frame of a bicycle, a hub rotatably arranged around the axis through a bearing and connected to a bicycle wheel through a plurality of bicycle spokes, a ring gearwheel wherein an internal tooth is formed on the inner periphery of the hub, a first coaxial gearwheel comprising a large diameter gearwheel and a small diameter gearwheel rotatably arranged on the above mentioned axis through a bearing, a large diameter planetary gearwheel interlocked with the above mentioned small diameter gearwheel, at least one or more small diameter planetary gearwheel mounted in the above mentioned ring gearwheel and arranged on the same axis as the large diameter planetary gearwheel and at least one or more motor prepared so that a pinion gear attached to a tip of the rotation axis is arranged at the position of the external tooth of the above mentioned large diameter gearwheel.
